# EUROPEAN PATENT APPLICATION

(11) **EP 3 118 734 A1**
(43) Date of publication of application: **18.01.2017**
(21) Application number: 14887934.9
(22) Date of filing: 04.12.2014
(51) Int. Cl.: G06F 3/06, G06F 15/17

(54) **HARD DISK DEVICE AND COMPUTER SYSTEM**

(30) Priority: 02.04.2014 CN 201410132202
(71) Applicant: Huawei Technologies Co. Ltd., Shenzhen, Guangdong 518129 (CN)
(72) Inventor: HU, Yongfa, Shenzhen Guangdong 518129 (CN); BI, Dechun, Shenzhen Guangdong 518129 (CN); SUN, Weihua, Shenzhen Guangdong 518129 (CN); LIU, Huifen, Shenzhen Guangdong 518129 (CN)
(74) Representative: Thun, Clemens
(86) International application number: PCT/CN2014/092993
(87) International publication number: WO 2015/149532

(57) **Abstract**

A hard disk apparatus and a computer system are provided. The hard disk apparatus includes: an interface module, a central processing unit CPU, and a storage module, where: the interface module is connected to the CPU, the CPU is connected to the storage module, and the CPU communicates with a host by using the interface module; the interface module is configured to receive a control instruction transmitted by the host, and transmit the control instruction to the CPU; the CPU is configured to receive the control instruction transmitted by the interface module, and control the storage module according to the instruction; and the CPU is further configured to acquire an execution result of the instruction, and feed back the execution result to the host by using the interface module. A message is directly transmitted between a host and a hard disk apparatus without conversion, and therefore, a delay in instruction execution can be reduced.

## Description

### TECHNICAL FIELD

The present invention relates to the computer field, and in particular, to a hard disk apparatus and a computer system.

### BACKGROUND

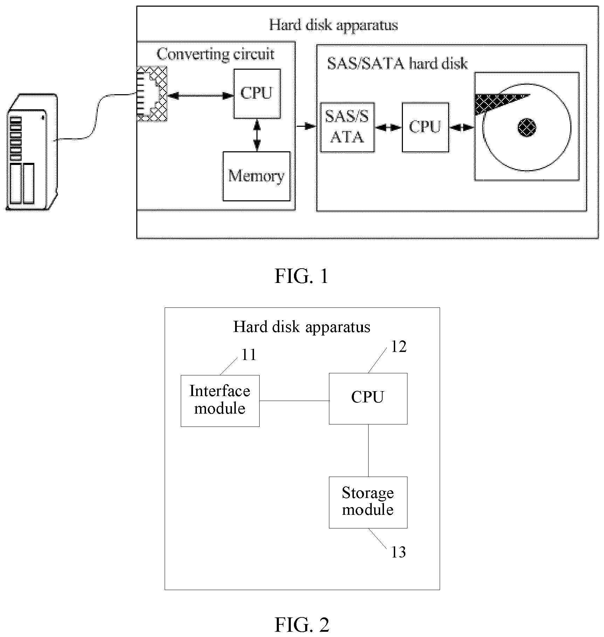

As shown in FIG. 1, currently, a converting circuit is disposed in most hard disk apparatuses. The converting circuit provides a network interface, and a host is connected to a network interface of a hard disk apparatus. The host delivers an instruction of a network format. A CPU (full spelling in English: Central Processing Unit, central processing unit) of the converting circuit converts the instruction of the network format into an instruction of an ATA (advanced technology attachment, advanced technology attachment)/SCSI (Small Computer System Interface, Small Computer System Interface) command format, and then delivers the instruction of the ATA/SCSI command format to an SAS (Serial Attached SCSI, Serial Attached SCSI)/SATA (Serial Advanced Technology Attachment, Serial Advanced Technology Attachment) hard disk. The CPU of the converting circuit converts an execution result of an ATA/SCSI format into an execution result of a network format, and feeds back the execution result of the network format to the host, where the execution result of the ATA/SCSI format is fed back by the SAS/SATA hard disk to the host.

Because conversion needs to be performed on a message transmitted between the host and the hard disk apparatus, a delay in instruction execution is relatively long.

### SUMMARY

Embodiments of the present invention provide a hard disk apparatus and a computer system, which can reduce a delay in instruction execution.

The following technical solutions are used in the embodiments of the present invention:

According to a first aspect, a hard disk apparatus is provided, including: an interface module, a central processing unit CPU, and a storage module, where: the interface module is connected to the CPU, the CPU is connected to the storage module, and the CPU communicates with a host by using the interface module; the interface module is configured to receive a control instruction transmitted by the host, and transmit the control instruction to the CPU; the CPU is configured to receive the control instruction transmitted by the interface module, and control the storage module according to the instruction; and the CPU is further configured to acquire an execution result of the instruction, and feed back the execution result to the host by using the interface module.

With reference to the first aspect, in a first possible implementation manner of the first aspect, the interface module includes a network interface, or the interface module includes a serial interface, or the interface module includes a network interface and a serial interface.

With reference to the first aspect, in a second possible implementation manner of the first aspect, the interface module includes a serial interface; and the CPU is further configured to check the control instruction transmitted by the host by using the serial interface.

With reference to the first aspect, in a third possible implementation manner of the first aspect, the interface module includes a network interface and a serial interface, where the serial interface is configured to: when communication performed by the host with the CPU by using the network interface fails, receive a configuration parameter of the network interface transmitted by the host, and transmit the configuration parameter to the network interface.

With reference to the first aspect, in a fourth possible implementation manner of the first aspect, the interface module includes a network interface and a serial interface, where the serial interface is configured to: when communication performed by the host with the CPU by using the network interface fails, receive a check instruction for checking the storage module transmitted by the host, and transmit the check instruction to the CPU; and the CPU is further configured to: perform fault detection on the storage module after receiving the check instruction, and when a fault is detected in the storage module, perform fault recovery on the storage module.

With reference to the first aspect, in a fifth possible implementation manner of the first aspect, the interface module includes a network interface and a serial interface, where the serial interface is configured to: when communication performed by the host with the CPU by using the network interface fails, receive a collection instruction for collecting status information of the storage module transmitted by the host, and transmit the collection instruction to the CPU; and the CPU is further configured to: collect the status information of the storage module after receiving the collection instruction, and feed back the status information of the storage module to the host by using the serial interface.

With reference to the first aspect or with reference to any possible implementation manner of the first aspect, in a sixth possible implementation manner of the first aspect, the storage module includes a mechanical hard disk, or the storage module includes a solid state disk SSD.

According to a second aspect, a computer system is provided, including a host and a hard disk apparatus, where: the hard disk apparatus includes: an interface module, a central processing unit CPU, and a storage module, the interface module is connected to the CPU, the CPU is connected to the storage module, and the CPU communicates with the host by using the interface module; the host is configured to transmit a control instruction to the hard disk apparatus by using the interface module, and control the hard disk apparatus; the interface module is configured to receive the control instruction transmitted by the host, and transmit the control instruction to the CPU; the CPU is configured to receive the control instruction transmitted by the interface module, and control the storage module according to the instruction; and the CPU is further configured to acquire an execution result of the instruction, and feed back the execution result to the host by using the interface module.

With reference to the second aspect, in a first possible implementation manner of the second aspect, the interface module of the hard disk apparatus includes a serial interface, the system further includes a backplane, the backplane is connected to the serial interface of the hard disk apparatus, and the host communicates with the hard disk apparatus by using the backplane; the host is further configured to carry an address of the hard disk apparatus when transmitting the control instruction to the hard disk apparatus by using the backplane; and the backplane is configured to transmit the control instruction to the hard disk apparatus by using the serial interface of the hard disk apparatus according to the address of the hard disk apparatus.

With reference to the second aspect, in a second possible implementation manner of the second aspect, the interface module includes a serial interface; and the CPU is further configured to check the control instruction transmitted by the host by using the serial interface.

With reference to the second aspect, in a third possible implementation manner of the second aspect, the interface module includes a network interface and a serial interface; and the host is further configured to: when communication performed by the host with the CPU by using the network interface fails, adjust a configuration parameter of the network interface by using the serial interface.

With reference to the second aspect, in a fourth possible implementation manner of the second aspect, the interface module includes a network interface and a serial interface; the host is further configured to: when communication performed by the host with the CPU by using the network interface fails, transmit the check instruction to the CPU by using the serial interface; and the CPU is further configured to: perform fault detection on the storage module after receiving the check instruction, and when a fault is detected in the storage module, perform fault recovery on the storage module.

With reference to the second aspect, in a fifth possible implementation manner of the second aspect, the interface module includes a network interface and a serial interface; the host is further configured to: when communication performed by the host with the CPU by using the network interface fails, transmit the collection instruction to the CPU by using the serial interface; and the CPU is further configured to: collect status information of the storage module after receiving the collection instruction, and feed back the status information of the storage module to the host by using the serial interface.

Based on the foregoing technical solutions, according to the hard disk apparatus and the computer system provided in the embodiments of the present invention, an interface module receives a control instruction transmitted by a host, and transmits the control instruction to the CPU; the CPU receives the control instruction transmitted by the interface module, and controls the storage module according to the instruction; and the CPU acquires an execution result of the instruction, and feeds back the execution result to the host by using the interface module. In this way, a message is directly transmitted between a host and a hard disk apparatus without conversion, and therefore, a delay in instruction execution can be reduced.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of an existing hard disk apparatus;
FIG. 2 is a schematic structural diagram of a hard disk apparatus according to an embodiment of the present invention;
FIG. 3 is a schematic structural diagram of a computer system according to an embodiment of the present invention;
FIG. 4 is a schematic structural diagram of a computer system according to an embodiment of the present invention;
FIG. 5 is a schematic structural diagram of a computer system according to an embodiment of the present invention; and
FIG. 6 is a schematic structural diagram of a computer system according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

A host in the embodiments of the present invention is a terminal device that has a computer function, which includes but is not limited to a desktop computer, a notebook computer, and a tablet computer.

A storage module in the embodiments of the present invention includes but is not limited to a flash component, a mechanical hard disk, and an SSD (Solid State Disk, solid state disk) hard disk.

As shown in FIG. 2, an embodiment of the present invention provides a hard disk apparatus. The hard disk apparatus includes: an interface module 11, a CPU 12, and a storage module 13, where the interface module 11 is connected to the CPU 12, the CPU 12 is connected to the storage module 13, and the CPU 12 communicates with a host by using the interface module 11.

The interface module 11 is configured to receive a control instruction transmitted by the host, and transmit the control instruction to the CPU 12.

The CPU 12 is configured to receive the control instruction transmitted by the interface module 11, and control the storage module 13 according to the instruction.

The CPU 12 is further configured to acquire an execution result of the instruction, and feed back the execution result to the host by using the interface module 11.

Specifically, the interface module 11 transmits the control instruction of a network format to the CPU 12, where the control instruction of the network format is transmitted by the host. The CPU 12 controls the storage module 13 by directly applying the control instruction of the network format. After acquiring the execution result of the instruction, the CPU 12 directly feeds back the execution result to the host. The control instruction may be a data write instruction, a data read instruction, or the like, and the execution result may be execution success or execution failure.

According to the hard disk apparatus in this embodiment of the present invention, an interface module receives a control instruction transmitted by a host, and transmits the control instruction to the CPU; the CPU receives the control instruction transmitted by the interface module, and controls the storage module according to the instruction; and the CPU acquires an execution result of the instruction, and feeds back the execution result to the host by using the interface module. In this way, a message is directly transmitted between a host and a hard disk apparatus without conversion, and therefore, a delay in instruction execution can be reduced.

In this embodiment of the present invention, the interface module 11 includes a network interface 111, or the interface module 11 includes a serial interface 112, or the interface module 11 includes a network interface 111 and a serial interface 112. In this way, the host is connected to the hard disk apparatus by using multiple types of interfaces, which can improve reliability.

In this embodiment of the present invention, optionally, when the interface module 11 includes the serial interface 112, the CPU 12 is further configured to check the control instruction transmitted by the host by using the serial interface 112. In this way, a control instruction that may cause a fault of the storage module may be filtered out.

In this embodiment of the present invention, optionally, when the interface module 11 includes the network interface 111 and the serial interface 112, the serial interface 112 is configured to: when communication performed by the host with the CPU 12 by using the network interface 111 fails, receive a configuration parameter of the network interfacetransmitted by the host, and transmit the configuration parameter to the network interface, so as to ensure normal communication between the network interface 111 and the host. For example, the configuration parameter may include an IP (Internet Protocol, Internet Protocol) address, a network mask, and the like.

In this embodiment of the present invention, optionally, the interface module 11 includes the network interface 111 and the serial interface 112, and the serial interface 112 is configured to: when communication performed by the host with the CPU 12 by using the network interface 111 fails, receive a check instruction for checking the storage module transmitted by the host, and transmit the check instruction to the CPU 12. Accordingly, the CPU 12 is further configured to: perform fault detection on the storage module 13 after receiving the check instruction, and when a fault is detected in the storage module 13, perform fault recovery on the storage module 13. In this way, when a fault occurs on the network interface 111, the host can still control the storage module 13 to perform fault detection, thereby improving system stability.

In this embodiment of the present invention, optionally, the interface module 11 includes the network interface 111 and the serial interface 112, and the serial interface 112 is configured to: when communication performed by the host with the CPU 12 by using the network interface 111 fails, receive a collection instruction for collecting status information of the storage module 13 transmitted by the host, and transmit the collection instruction to the CPU 12. Accordingly, the CPU 12 is further configured to: collect the status information of the storage module 13 after receiving the collection instruction, and feed back the status information of the storage module 13 to the host by using the serial interface 112. For example, when the storage module 13 is a hard disk, the status information may include information, such as SMART data (Self-Monitoring Analysis and Reporting Technology, Self-Monitoring, Analysis and Reporting Technology) and a hard disk log. In this way, when a fault occurs on the network interface 111, the host can still collect the status information of the storage module 13, thereby improving system reliability.

According to the hard disk apparatus in this embodiment of the present invention, an interface module receives a control instruction transmitted by a host, and transmits the control instruction to the CPU; the CPU receives the control instruction transmitted by the interface module, and controls the storage module according to the instruction; and the CPU acquires an execution result of the instruction, and feeds back the execution result to the host by using the interface module. In this way, a message is directly transmitted between a host and a hard disk apparatus without conversion, and therefore, a delay in instruction execution can be reduced.

According to the hard disk apparatus in this embodiment of the present invention, when a fault occurs on a network interface, the host communicates with the hard disk apparatus by using a serial interface, thereby improving reliability of the hard disk apparatus. In addition, a peripheral converting circuit in the prior art is omitted from the hard disk apparatus in this embodiment of the present invention, so that a volume of the hard disk apparatus can be reduced and costs of components can be reduced.

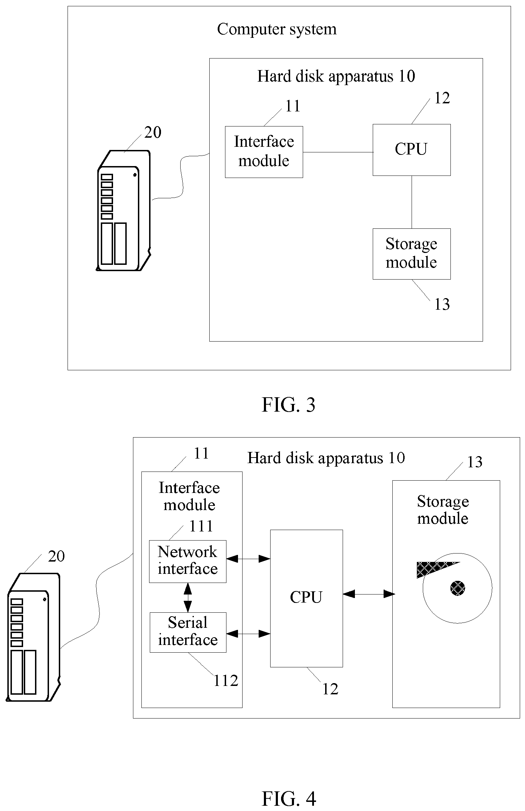

As shown in FIG. 3, an embodiment of the present invention provides a computer system. The computer system includes a host 20 and a hard disk apparatus 10, where the hard disk apparatus 10 includes: an interface module 11, a central processing unit CPU 12, and a storage module 13, the interface module 11 is connected to the CPU 12, the CPU 12 is connected to the storage module 13, and the CPU 12 communicates with the host 20 by using the interface module 11.

The host 20 is configured to transmit a control instruction to the hard disk apparatus 10 by using the interface module 11, and control the hard disk apparatus 10.

The interface module 11 is configured to receive the control instruction transmitted by the host 20, and transmit the control instruction to the CPU 12.

The CPU 12 is configured to receive the control instruction transmitted by the interface module 11, and control the storage module 13 according to the instruction.

The CPU 12 is further configured to acquire an execution result of the instruction, and feed back the execution result to the host 20 by using the interface module 11.

According to the computer system in this embodiment of the present invention, an interface module of a hard disk apparatus receives a control instruction transmitted by a host, and transmits the control instruction to the CPU; the CPU receives the control instruction transmitted by the interface module, and controls the storage module according to the instruction; and the CPU acquires an execution result of the instruction, and feeds back the execution result to the host by using the interface module. In this way, a message is directly transmitted between a host and a hard disk apparatus without conversion, and therefore, a delay in instruction execution can be reduced.

In this embodiment of the present invention, optionally, the interface module 11 includes a network interface 111, or the interface module 11 includes a serial interface 112, or the interface module 11 includes a network interface 111 and a serial interface 112. In this way, the host is connected to the hard disk apparatus by using multiple types of interfaces, which can improve reliability.

As shown in FIG. 4, an embodiment of the present invention provides a computer system. The computer system includes a host 20 and a hard disk apparatus 10, where the hard disk apparatus 10 includes: an interface module 11, a central processing unit CPU 12, and a storage module 13, the interface module 11 includes a network interface 111 and a serial interface 112, the interface module 11 is connected to the CPU 12, the CPU 12 is connected to the storage module 13, and the CPU 12 communicates with the host 20 by using the interface module 11.

In this embodiment of the present invention, the host connected to the network interface 111 of the hard disk apparatus by using a network cable. A command sent by the host 20 passes through the network interface 111 and arrives at the CPU 12. After parsing the command, the CPU 12 directly controls the storage module 13 to execute the command sent by the host. After the command is executed, the CPU 12 feeds back an execution result of the command to the host 20 by using the network interface 111. After receiving the command by using the network interface, the hard disk apparatus can directly control a disk sheet apparatus to read and write data. A converting circuit does not need to be added to an exterior of a hard disk, and conversion of an ATA/SCSI command is not needed either. The host is connected to the serial interface of the hard disk apparatus by using a serial interface. A command sent by the host 20 passes through the serial interface 112 and arrives at the CPU 12. After parsing the command, the CPU 12 directly controls the storage module 13 to execute the command sent by the host. After the command is executed, the CPU 12 feeds back an execution result of the command to the host 20 by using the serial interface 112. By using the serial interface, the command delivered by the host by using the network interface 111 may be monitored, so as to filter out a command that may cause a fault of the hard disk. When an IP address fails to be acquired by using the network interface 111, a network parameter of the network interface 111, such as the IP address and a network mask, is set by using the serial interface 112, so that the network interface 111 can normally communicate with the host. When communication between the network interface 111 and the host is abnormal, a command is delivered to the hard disk by using the serial interface 112, so as to perform diagnosis to determine whether a fault occurs in the hard disk and perform recovery. In addition, key information, such as SMART data and a hard disk log, of the hard disk is collected by using the serial interface 112.

It should be noted that in this embodiment of the present invention, only an example in which the interface module includes both a network interface and a serial interface is used for description. In another embodiment of the present invention, the interface module may include only a network interface, or the interface module may include only a serial interface, functions implemented by the network interface and the serial interface are similar, and this embodiment of the present invention sets no specific limitation.

According to the hard disk apparatus in this embodiment of the present invention, an interface module receives a control instruction transmitted by a host, and transmits the control instruction to the CPU; the CPU receives the control instruction transmitted by the interface module, and controls the storage module according to the instruction; and the CPU acquires an execution result of the instruction, and feeds back the execution result to the host by using the interface module. In this way, a message is directly transmitted between a host and a hard disk apparatus without conversion, and therefore, a delay in instruction execution can be reduced. When a fault occurs on a network interface, the host communicates with the hard disk apparatus by using a serial interface, thereby improving reliability of the hard disk apparatus. In addition, a peripheral converting circuit in the prior art is omitted from the hard disk apparatus in this embodiment of the present invention, so that a volume of the hard disk apparatus can be reduced and costs of components can be reduced.

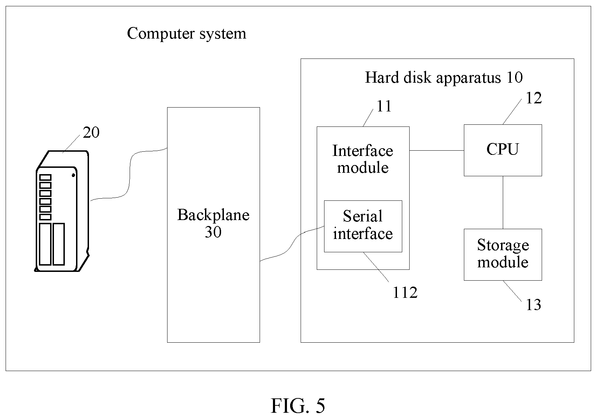

As shown in FIG. 5, in this embodiment of the present invention, optionally, when the interface module 11 of the hard disk apparatus 10 includes the serial interface 112, the system further includes a backplane 30, the backplane 30 is connected to the serial interface 112 of the hard disk apparatus 10, and the host 20 communicates with the hard disk apparatus 10 by using the backplane 30. The host 20 is further configured to carry an address of the hard disk apparatus 10 when transmitting the control instruction to the hard disk apparatus 10 by using the backplane 30. The backplane 30 is configured to transmit the control instruction to the hard disk apparatus 10 by using the serial interface 112 of the hard disk apparatus 10 according to the address of the hard disk apparatus 10.

According to a serial interface cascading solution for the apparatus in the present invention, a serial interface cascading manner is greatly simplified, and multiple hard disk apparatuses share a same serial interface of a backplane, which improves maintainability of the system. Because the hard disk apparatus can directly provide a network interface, a hard disk can be directly accessed by using a network interface without converting an ATA/SCSI command, and a command delay is reduced. However, when a fault occurs on the network interface of the hard disk apparatus, a host communicates with the hard disk apparatus by using a provided serial interface, can set a parameter of the network interface, can monitor a command delivered by using the network interface, can perform fault diagnosis and recovery on the hard disk apparatus, can collect key information of the hard disk, and the like, thereby improving reliability of the hard disk apparatus. In addition, a peripheral converting circuit is no longer needed to provide a network interface, a quantity of components in the hard disk apparatus is reduced, and the peripheral converting circuit is omitted from the hard disk apparatus, so that a volume of the hard disk apparatus can be reduced, and costs of the components can be reduced.

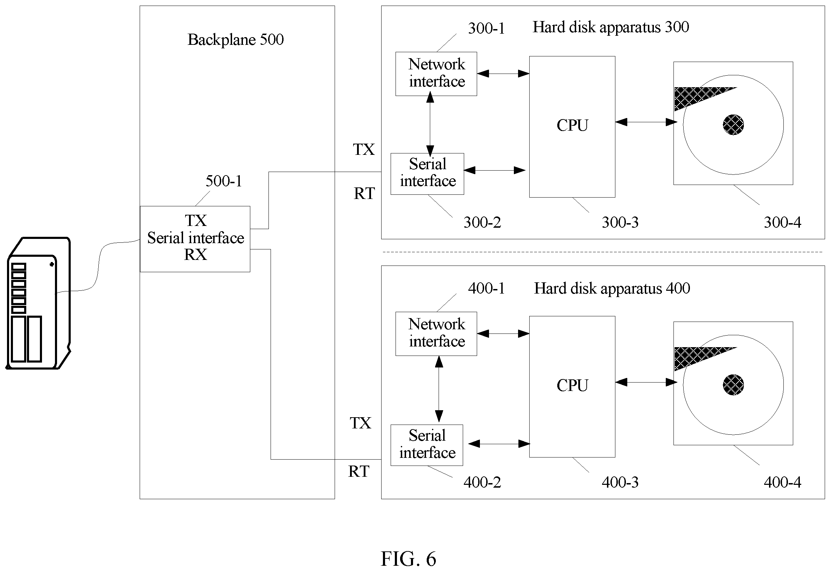

In another implementation manner shown in FIG. 6, a backplane used to cascade multiple network hard disk apparatuses is provided, where the backplane can provide a power supply interface for each network hard disk apparatus. In addition, a serial interface 500-1 is provided on the backplane. TX (Transmit, transmit) cables of serial interfaces of all the network hard disk apparatuses are connected to an RX cable of the serial interface 500-1 of the backplane, and RX (Receive, receive) cables of all the network hard disk apparatuses are connected to a TX cable of the serial interface 500-1 of the backplane. In this way, in the host 20, by accessing the serial interface 500-1 of the backplane, the serial interfaces of all the cascaded hard disk apparatuses can be accessed. Information delivered by the host 20 to the serial interface 500-1 of the backplane includes address information of a hard disk, where the address information is used to identify a hard disk apparatus. After receiving the information from the host 20, the hard disk apparatuses first perform address matching, and only a hard disk apparatus that matches the information from the host 20 responds to the host 20. In this way, multiple hard disk apparatuses can share a same serial interface of a backplane.

According to a serial interface cascading solution for the apparatus in the present invention, a serial interface cascading manner is greatly simplified, and multiple hard disk apparatuses share a same serial interface of a backplane, which improves maintainability of the system.

In this embodiment of the present invention, optionally, when the interface module 11 includes the serial interface 112, the CPU 12 is further configured to check the control instruction transmitted by the host 20 by using the serial interface 112. In this way, a control instruction that may cause a fault of the storage module may be filtered out.

In this embodiment of the present invention, optionally, when the interface module 11 includes the network interface 111 and the serial interface 112, the host 20 is further configured to: when communication performed by the host 20 with the CPU 12 by using the network interface 111 fails, adjust a configuration parameter of the network interface 111 by using the serial interface 112, so as to ensure normal communication between the network interface 111 and the host. For example, the configuration parameter may include an IP address, a network mask, and the like.

In this embodiment of the present invention, optionally, when the interface module 11 includes the network interface 111 and the serial interface 112, the host 20 is further configured to: when communication performed by the host 20 with the CPU 12 by using the network interface 111 fails, transmit the check instruction to the CPU 12 by using the serial interface 112. Accordingly, the CPU 12 is further configured to: perform fault detection on the storage module 13 after receiving the check instruction, and when a fault is detected in the storage module 13, perform fault recovery on the storage module 13. In this way, when a fault occurs on the network interface 111, the host can still control the storage module 13 to perform fault detection, thereby improving system stability.

In this embodiment of the present invention, optionally, when the interface module 11 includes the network interface 111 and the serial interface 112, the host 20 is further configured to: when communication performed by the host 20 with the CPU 12 by using the network interface 111 fails, transmit the collection instruction to the CPU 12 by using the serial interface 112. Accordingly, the CPU 12 is further configured to: collect status information of the storage module 13 after receiving the collection instruction, and feed back the status information of the storage module 13 to the host 20 by using the serial interface 112. For example, when the storage module 13 is a hard disk, the status information may include information, such as SMART data and a hard disk log. In this way, when a fault occurs on the network interface 111, the host can still collect the status information of the storage module 13, thereby improving system reliability.

According to the computer system in this embodiment of the present invention, an interface module of a hard disk apparatus receives a control instruction transmitted by a host, and transmits the control instruction to the CPU; the CPU receives the control instruction transmitted by the interface module, and controls the storage module according to the instruction; and the CPU acquires an execution result of the instruction, and feeds back the execution result to the host by using the interface module. In this way, a message is directly transmitted between a host and a hard disk apparatus without conversion, and therefore, a delay in instruction execution can be reduced.

In the computer system in this embodiment of the present invention, because the hard disk apparatus can directly provide a network interface, a hard disk can be directly accessed by using a network interface without converting an ATA/SCSI command, and a command delay is reduced. However, when a fault occurs on the network interface of the hard disk apparatus, a host communicates with the hard disk apparatus by using a provided serial interface, can set a parameter of the network interface, can monitor a command delivered by using the network interface, can perform fault diagnosis and recovery on the hard disk apparatus, can collect key information of the hard disk, and the like, thereby improving reliability of the hard disk apparatus. In addition, a peripheral converting circuit is no longer needed to provide a network interface, a quantity of components in the hard disk apparatus is reduced, and the peripheral converting circuit is omitted from the hard disk apparatus, so that a volume of the hard disk apparatus can be reduced, and costs of the components can be reduced.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that such implementation goes beyond the scope of the present invention.

According to the foregoing description of the embodiments, it may be clearly understood by a person skilled in the art that the present invention may be implemented by software plus necessary universal hardware, where the universal hardware includes a universal integrated circuit, a universal CPU, a universal memory, a universal device, and the like, or certainly may be implemented by application-specific hardware, including an application-specific integrated circuit, an application-specific CPU, an application-specific memory, an application-specific device, and the like, but in many cases, the former one is preferred. Based on such an understanding, the technical solutions of the present invention essentially or the part contributing to the prior art may be implemented in a form of a software product. The computer software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely exemplary embodiments of the present invention, but are not intended to limit the present invention. Any modification, equivalent replacement, and improvement made without departing from the spirit and principle of the present invention shall fall within the protection scope of the present invention.

## Claims

1. A hard disk apparatus, comprising: an interface module, a central processing unit CPU, and a storage module, wherein: the interface module is connected to the CPU, the CPU is connected to the storage module, and the CPU communicates with a host by using the interface module;
the interface module is configured to receive a control instruction transmitted by the host, and transmit the control instruction to the CPU;
the CPU is configured to receive the control instruction transmitted by the interface module, and control the storage module according to the instruction; and
the CPU is further configured to acquire an execution result of the instruction, and feed back the execution result to the host by using the interface module.

2. The apparatus according to claim 1, wherein the interface module comprises a network interface, or the interface module comprises a serial interface, or the interface module comprises a network interface and a serial interface.

3. The apparatus according to claim 1, wherein the interface module comprises a serial interface; and
the CPU is further configured to check the control instruction transmitted by the host by using the serial interface.

4. The apparatus according to claim 1, wherein the interface module comprises a network interface and a serial interface, wherein the serial interface is configured to:
receive a configuration parameter of the network interface transmitted by the host when the host fails to communicate with the CPU by using the network interface, and
transmit the configuration parameter to the network interface.

5. The apparatus according to claim 1, wherein the interface module comprises a network interface and a serial interface, wherein the serial interface is configured to:
receive a check instruction for checking the storage module transmitted by the host when the host fails to communicate with the CPU by using the network interface, and transmit the check instruction to the CPU; and
the CPU is further configured to: perform fault detection on the storage module after receiving the check instruction, and perform fault recovery on the storage module when a fault is detected in the storage module.

6. The apparatus according to claim 1, wherein the interface module comprises a network interface and a serial interface, wherein the serial interface is configured to:
receive a collection instruction for collecting status information of the storage module transmitted by the host when the host fails to communicate with the CPU by using the network interface, and transmit the collection instruction to the CPU; and
the CPU is further configured to: collect the status information of the storage module after receiving the collection instruction, and feed back the status information of the storage module to the host by using the serial interface.

7. The apparatus according to any one of claims 1 to 6, wherein the storage module comprises a mechanical hard disk, or the storage module comprises a solid state disk SSD.

8. A computer system, comprising a host and a hard disk apparatus, wherein: the hard disk apparatus comprises: an interface module, a central processing unit CPU, and a storage module, the interface module is connected to the CPU, the CPU is connected to the storage module, and the CPU communicates with the host by using the interface module;
the host is configured to transmit a control instruction to the hard disk apparatus by using the interface module, and control the hard disk apparatus;
the interface module is configured to receive the control instruction transmitted by the host, and transmit the control instruction to the CPU;
the CPU is configured to receive the control instruction transmitted by the interface module, and control the storage module according to the instruction; and
the CPU is further configured to acquire an execution result of the instruction, and feed back the execution result to the host by using the interface module.

9. The system according to claim 8, wherein the interface module of the hard disk apparatus comprises a serial interface, the system further comprises a backplane, the backplane is connected to the serial interface of the hard disk apparatus, and the host communicates with the hard disk apparatus by using the backplane;
the host is further configured to carry an address of the hard disk apparatus on the control instruction transmitting to the hard disk apparatus by using the backplane; and
the backplane is configured to transmit the control instruction to the hard disk apparatus by using the serial interface of the hard disk apparatus according to the address of the hard disk apparatus.

10. The system according to claim 8, wherein the interface module comprises a serial interface; and
the CPU is further configured to check the control instruction transmitted by the host by using the serial interface.

11. The system according to claim 8, wherein the interface module comprises a network interface and a serial interface; and
the host is further configured to: adjust a configuration parameter of the network interface by using the serial interface when the host fails to communicate with the CPU by using the network interface.

12. The system according to claim 8, wherein the interface module comprises a network interface and a serial interface;
the host is further configured to: transmit a check instruction to the CPU by using the serial interface when the host fails to communicate with the CPU by using the network interface; and
the CPU is further configured to: perform fault detection on the storage module after receiving the check instruction, and when a fault is detected in the storage module, perform fault recovery on the storage module.

13. The system according to claim 8, wherein the interface module comprises a network interface and a serial interface;
the host is further configured to: transmit the collection instruction to the CPU by using the serial interface when the host fails to communicate with the CPU by using the network interface; and
the CPU is further configured to: collect status information of the storage module after receiving the collection instruction, and feed back the status information of the storage module to the host by using the serial interface.
